# EUROPEAN PATENT APPLICATION

(11) **EP 2 567 741 A1**
(43) Date of publication of application: **13.03.2013**
(21) Application number: 11180416.7
(22) Date of filing: 07.09.2011
(51) Int. Cl.: A63F 13/12

(54) **Apparatus, and associated method, for providing synchronized media play out**

(71) Applicant: Research In Motion Limited, Waterloo, ON N2L 3W8 (CA)
(72) Inventor: Bartnik, Grant Henry Robert, Waterloo, Ontario N2L 3W8 (CA); Sivakumaran, Arun Prasath, Waterloo, Ontario N2L 3W8 (CA); Snyder, Christopher Eugene, Waterloo, Ontario N2L 3W8 (CA)
(74) Representative: Noble, Nicholas

(57) **Abstract**

An apparatus, and an associated method, provides for synchronized play out of media at separate devices. An invitation is generated at a device and communicated to a second device to invite a user of the second device to share media streaming of common media content pursuant to a common media experience. Control commands generated at one of the devices is communicated to another of the devices upon a bearer control channel to cause control of the media play out in a common manner at each of the devices.

## Description

The present disclosure relates generally to a manner by which to facilitate synchronized play out of media at separate play out devices. More particularly, the present disclosure relates to an apparatus, and an associated method, by which to initiate shared play out of the media and to maintain coordination of the media play out at the separate play out devices.

Media, such as streaming video content or video gaming content is played out at the devices in the same manner and maintained in synchronization through use of endpoint bearer control primitives communicated upon a bearer control channel established between the devices.

### Background

Recent years have been witness to significant advancements in technology. Such advancements have improved many aspects of modem society. Advancements in communication technologies, for instance, have permitted the development and deployment of communication devices and systems that provide for many varied services and functions. New communication devices and systems provide for data-intensive communication operations.

Data throughput capabilities of communication systems have increased and permit the communication of data pursuant to data-intensive communication services carried out between communication endpoints. Data services are available to provide, for instance, streaming media services, such as streaming video services that permit play out of media at a communication endpoint. On-demand services that provide for streaming play out of media data at the convenience of a viewer have become very popular. Streaming broadcast media is available and viewing of broadcast streams has also become very popular. Commercial enterprises oftentimes provide streaming media services. Streaming media is available for viewing by way of the internet. Streaming media services available by way of the internet increasingly provide an alternative to conventional, broadcast communication systems. Such services are increasingly available to radio devices, such as mobile phones referred to as smartphones. Smart phones, and other analogous radio devices, are typically capable of accessing the internet, to receive broadband-communicated data, and to operate upon the data in a manner to permit its play out of the data in a real time, or close-to-real time, manner.

Social networking is also a communication service that has become very popular and is used by many on a regular basis. Social media sites are available for access by way of the internet by both fixed, work stations and also by smart phones and other radio devices. Social media sites sometimes also provide for instant message or other push message services as well as other services. Online gaming services, are exemplary of interactive media services sometimes provided by a social media site. And, gaming services are also provided independent of social media sites. Other media gaming services include both single-player gaming services and multi-player gaming services.

The popularity of social media sites and of multi-player, interactive gaming services, highlights the social aspects of internet-based services upon which the social media and gaming services derive their popularity. Parties located at disparate locations are able to interact in a real time, or near real time, manner pursuant to the interactive service.

While popular, shared experiences between the different services are limited due to various communication issues and difficulties. Some of such difficulties are a result of differing communication paths upon which media data is communicated to, and with, devices positioned at separate communication endpoints. Differences in the communication paths sometimes result in different time periods needed to communicate media communication paths to devices positioned at the different communication endpoints. Media played out at the devices located at the different endpoints are, as a result, not necessarily played out concurrently. Rather, the media is played out in a non-synchronous manner. The non-synchronous play out detracts from a shared experience of users.

A solution to this type of problem would enhance user experience in a shared activity.

It is in light of this background information related to shared media services that the significant improvements of the present disclosure have evolved.

### Brief Description of the Drawings

Figure 1 illustrates a functional block diagram of a communication system in which an implementation of the present disclosure is implemented.

Figure 2 illustrates a functional block diagram of a communication device that forms part of the communication system shown in Figure 1.

Figure 3 illustrates a representation of a portion of the communication device of an implementation of the present disclosure.

Figure 4 illustrates a sequence diagram representative of exemplary operation of an implementation of the present disclosure.

Figure 5 illustrates a method flow diagram representative of the method of operation of an implementation of the present disclosure.

### Detailed Description

The present disclosure, accordingly, advantageously provides an apparatus, and an associated method, for providing synchronized media play out at devices positioned at communication endpoints.

Through operation of an implementation of the present disclosure, a manner is provided by which to initiate shared play out of the media and to maintain coordination of the media play out at the separate play out devices.

In one aspect of the present disclosure, the media, e.g., streaming video content or video gaming content, is played out at the devices in the same manner, maintained in synchronization through use of endpoint bearer control primitives communicated upon a bearer control channel established between the devices.

In another aspect of the present disclosure, devices through which users are to share a media experience are placed in communication connectivity with a media source. The media source comprises any of various media sources, positioned at any of various locations including both a network-positioned location and a device-positioned location. That is to say, the media source is any media source that is accessible by the devices at which the media play out is to be shared. The media source provides any of a broadcast media service and an on-demand media service.

In another aspect of the present disclosure, media play out is initiated by a media play out initiator. The media play out initiator is implemented, e.g., at a device that is to be a party to the shared media experience. The media play out initiator, when embodied at an initiating device, initiates the media play out through the generation of a request that is routed to the device of another party to invite the other party to share the media experience. The request comprises, for instance, a packet-based message, such as a push message, an email message, or an SMS (short message service) message.

In another aspect of the present disclosure, the device to which the request is sent forms a recipient device that receives the request. A media play out initiator is also embodied at the recipient device. The media play out initiator embodied at the recipient device generates a response to the request generated elsewhere, such as at the initiating device that forms or sends the request. The response comprises an acceptance indication if the recipient device is to participate in the play out of the media pursuant to the shared media experience. The response comprises, for instance, a packet-formatted message, such as a push message, an email message, or an SMS message. If selection is made not to participate in the shared media experience, a response, in one implementation, is also generated to indicate the selection not to participate.

In another aspect of the present disclosure, when the media play out is to be shared by the devices at the separate endpoint locations, a media play out initiator causes creation of an endpoint bearer control channel between the devices that are to be parties to the play out of the media pursuant to the shared media experience. The endpoint bearer control channel provides for direct messaging between the devices that are to be parties to the media play out.

In another aspect of the present disclosure, the endpoint bearer control channel is formed upon a unified communication framework defined by a common entity through, and between, which the control channel extends.

In another aspect of the present disclosure, once the endpoint bearer channel is formed, play out of the media is coordinated so that play out is synchronized at the devices at which the media plays out.

In another aspect of the present disclosure, the coordination and resultant synchronization of the media play out is maintained through the communication of endpoint bearer control primitives on the endpoint bearer control channel. An endpoint bearer control primitive is generated, e.g., at a media play out synchronizer embodied at any, or all, of the devices that are parties to the shared media experience. The endpoint bearer control primitives comprised, e.g., TCP-formatted primitives or UDP-formatted primitives.

In another aspect of the present disclosure, the endpoint bearer control primitives comprise simple, primitive control commands including, e.g., a play command, a pause command, a stop command, and a rewind command. Such commands are, e.g., user-initiated commands. Additional control commands include device-initiated commands that, e.g., regulate play out of the media at the devices to correct for jitter and communication-path differences. The primitives are generated, e.g., at a media play out synchronizer embodied at a device that is party to the shared media play out. The endpoint bearer control primitive is issued on the endpoint bearer control channel and communicated thereon to another device that is also party to the media play out. The issuance of a command at a first of the devices controls the manner in which the media is treated at the issuing device. And, the communication of the endpoint bearer control primitive to another of the devices is used, when received at the other of the devices to control the media play out at the other of the devices. Thereby, even though the different devices receive streaming media by way of separate communication paths, the play out is coordinated due to the issuance and communication of the control primitives on the endpoint bearer control channel formed between the devices. The play out of the media, as a result, appears to be synchronized at the separate devices.

In another aspect of the present disclosure, the endpoint bearer control channel is further configured to provide for coordination by which to establish a VOIP connection to provide for communication of VOIP, or other voice-related, data. Viewers of the media are able to communicate therethrough on the same channels upon which the endpoint bearer control primitives are communicated.

In another aspect of the present disclosure, the endpoint bearer control channel is further configured to coordinate the retransmission of streamed media from one endpoint to another. Such a scenario may arise when one endpoint encounters congestion or is otherwise unable to receive the streamed media from the source, while the other endpoint encounters no such difficulty. In this scenario the established bearer control channel may be used to coordinate the establishment of an additional data connection between the end points wherein the streamed media is relayed from the endpoint that is still able to receive the stream to the endpoint that has encountered a disruption of service.

In these and other aspects, therefore, an apparatus, and an associated method, is provided for facilitating shared play out of commonly sourced media at first and at least second communication endpoints. A media play out initiator is configured to initiate the shared play out of the commonly sourced media at the first and at least the second communication endpoints. A media play out synchronizer is configured to synchronize the shared play out that is initiated by the media play out initiator. The media play out synchronizer is configured to cause synchronous play out of the commonly sourced media at each of the first and at least communication endpoints.

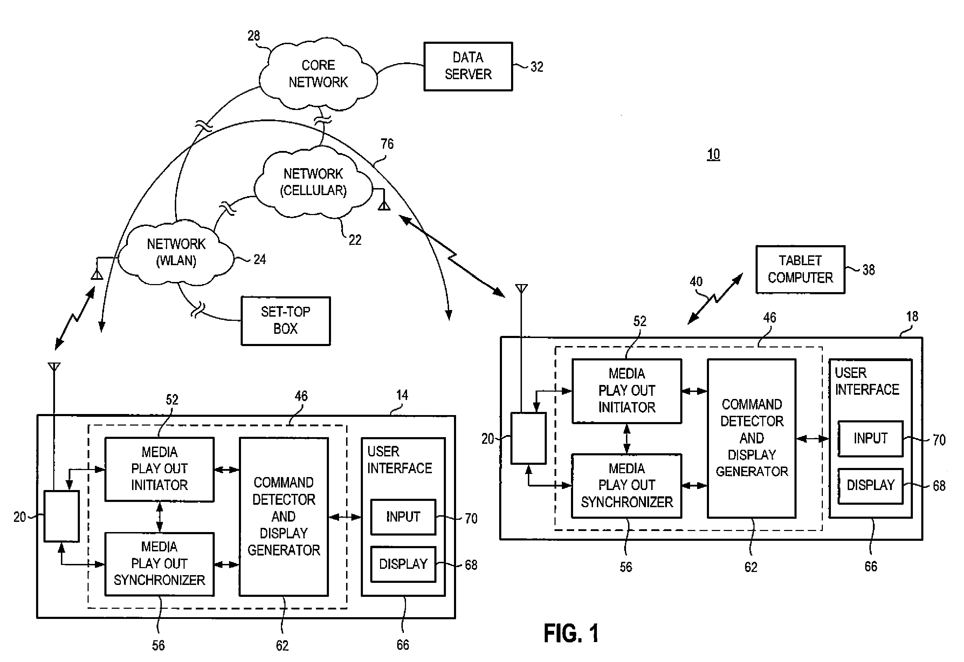

Turning first, therefore, to Figure 1, a communication system, shown generally at 10, provides for communications with communication devices of which a set of two communication devices, communication device 14 and communication device 18 are shown in the figure. In the illustrated implementation, the devices 14 and 18 are each radio communication devices having radio transceiver elements 20 capable of transceiving radio communication signals. In other implementations, additional communication devices are utilized.

In the exemplary illustration of Figure 1, the network part of the communication system comprises a first radio network 22, here a cellular network, a second radio network 24, here a wireless local area network (WLAN), and a core network 28, such as the internet. The networks 22 and 24 are directly connectable to the core network 28. And, the network 24 is maintained in an interworking relationship with the network 22.

Communication entities are connectable to the network part. Here, by way of example, a data server 32 is placed in communication connectivity with the core network 28. The data stores data, comprising media that is streamed during operation of the communication service. The sourcing of media at the data server 32 is merely exemplary. Media used pursuant to a streaming media service is alternately sourced elsewhere including, for example, at one of the communication stations 14 and 18 or elsewhere, such as at a set-top box 36, here placed in communication connectivity with the radio network 24. The media at the data server 32, or elsewhere, is representative of media that is streamed pursuant to a broadcast service or an on-demand service.

The communication stations 14 and 18 are each capable of participating in a streaming media application, such as streaming media sourced at the data server 32. In the illustrated implementation, the communication station 14 comprises a smart phone that is placed in communication connectivity with the radio network 24. And, the communication station 18 forms a smart phone placed in communication connectivity with the radio network 22. The smart phone 18 is also in communication connectivity with a device 38 that includes a display screen. The device 38 comprises, for instance, a tablet computer that is coupled to the smart phone 18 by way of a short-range radio link 40, such as Bluetooth ™ or the like.

As mentioned previously, users of different devices might one to share a media experience, such as an experience provided by viewing streaming video or streaming media pursuant to a gaming application, etc. The media is provided by way of different communication paths, i.e., separate streams of media are provided to the different communication devices. As a result, coordination of the separate media streams is difficult to maintain. Existing schemes generally require separate communications, such as by way of a telephone call between the viewers, to verbally communicate information that permits the coordination of the play out of the media at the different devices.

The devices 14 and 18 each include an apparatus 46 of an implementation of the present disclosure. The apparatus facilitates coordination of play out of the media at the separate devices to permit the play out at the separate devices to be maintained in synchronization with one another. The apparatus 46 is functionally represented, implementable in any desired manner. For instance, the apparatus is formed of hardware elements, firmware elements, program code executable by processing circuitry, and combinations thereof.

In the exemplary implementation, the apparatus 46 includes a media play out initiator 52 and a media play out synchronizer 56. The apparatus further includes a command detector and display presenter 62 that detects commands, such as commands entered at the user interface 66 and provides for display presentations at a display element 68 of the user interface and for inputs to be entered at an input actuator 70.

In operation, a user of any of the devices 14 and 18 elects to invite a user of another of the devices 14 and 18 to share a media experience. The device forms the initiating device. The user enters a request by way of entry at an input actuator of the user interface 66 of the device of the user. The input command forming a request to another to join in a shared media experience causes generation of a request, such as a packet-formatted request forming a push message, email message, SMS message, or other type of request, is sent on a radio channel, delivered to the network portion of the communication system, routed through the network portion, and delivered to the device to which the request is directed, i.e., the recipient device. The message, once delivered, is displayed to a user of the recipient device, permitting the user of the device to accept the invitation to share in the media service. In the exemplary implementation, the user of the recipient device that receives the request enters a response to the request by way of an input actuator of the device. And, the response is returned to the requesting device. The response, in the exemplary implementation, also forms a packet-formatted message, such as a push message, an email message, an SMS message, or another type of message, that is sent upon a radio channel to the network portion of the communication system, routed thereto, and delivered to the requesting device.

When the response to the request is acceptance of the invitation, the media play out initiator 52 of the requesting device is provided with an indication of the acceptance and initiates shared play out of the media. Pursuant to the initiation, the initiator initiates creation of an endpoint bearer control channel, represented by the segment 76, between the devices that are to be parties to the shared media experience. While, in the exemplary implementation, two parties, parties associated with the devices 14 and 18, are to be part of a shared media experience, in other implementations, additional numbers of devices are utilized to share the media service between a larger number of parties so that the larger numbers of parties share in the media experience.

In the exemplary implementation, the endpoint bearer control channel is established upon a unified communication framework formable between the devices 14 and 18. For instance, the unified communication framework utilizes a push message or other analogous service that is common to both of the devices and provides for harmonized routing of the message to an appropriate destination.

The media play out initiators 46 of the devices 14 and 18 that are to be parties to the shared media experience also initiate the streaming of media to the respective devices. In one implementation, the initiation of the media streaming is performed by a single one of the devices with instructions to cause the media streaming to commence to all of the devices to which the media is to be streamed. Media streaming is initiated, for instance, by sending requests to the media source, such as the data server 32 for the streaming of the media. The media streams commence in response to the requests for the media.

The media play out synchronizers of the devices at which the media play out is to be shared coordinate the play out of the media. Coordination synchronizes, and maintains the media play out in synchronization. Coordination between the devices is carried out through the issuance of endpoint bearer control primitives that are communicated between the devices upon the endpoint bearer control channel. The endpoint bearer control primitives comprise, for instance, start commands, stop commands, pause commands, rewind commands, etc that comprise user-initiated commands and also device-initiated commands that are initiated automatically and form, e.g., device and streaming control commands.

A command issued by a media play out synchronizer of one of the devices 14 and 18 is generated, e.g., in response to user entry of an associated input command at an input actuator of a user interface of the associated device. The device at which the command is issued forms the command-issuing, or issuing, device. The input command is detected by the detector display presenter 62 of the device that, in turn, causes the media play out synchronizer to generate the bearer control primitive conforming to the input command on the endpoint bearer channel 76 for communication to the other device or devices participating in the shared media experience. The input command controls operation of the media play out both at the device at which the command is entered and also at another device to which the bearer control primitive is communicated. In this manner, the play, pause, stop, rewind, etc. and other control commands are used to control the media play out at the respective devices, thereby coordinating the play out of the media and maintaining the play out in synchronization at the separate devices.

In one implementation, the endpoint bearer control channel 76 is further used to coordinate establishment of VOIP communications by which to communicate voice data between the respective devices. The communication of voice information between the device is further facilitates the shared experience of the shared media play out.

In one implementation, the endpoint bearer control channel is channel 76 is also used pursuant to retransmission of streamed media between devices, such as the devices 14 and 18. For example, in the event of network congestion, or other communication difficulty, that prevents acceptable streaming of media from a data source to one of the devices, the streamed media is retransmitted by a device to which the streamed media is successfully delivered. The endpoint bearer control channel is used to coordinate establishment of an additional data connection to provide for retransmission of the streamed media to the device to which the media has not been delivered in an acceptable manner.

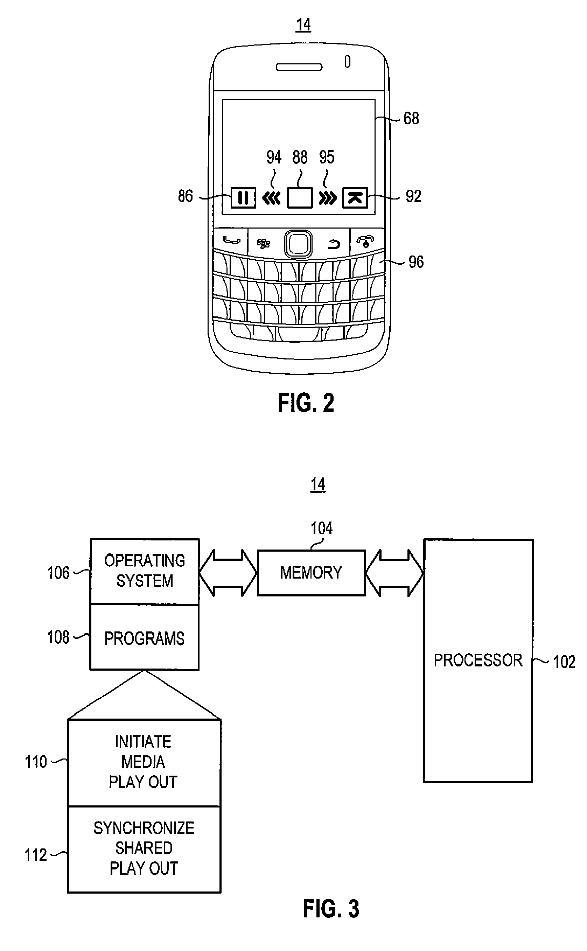

Figure 2 illustrates an exemplary display displayed at a display element 68 of the user interface of the device 14 shown to form part of the communication system 10 illustrated in Figure 1. The display is generated during operation of an implementation of the present disclosure.

Specifically, the display is generated subsequent to the initiation of media play out operations and the bearer control channel is established. The display illustrated in Figure 2 is displayed, e.g., upon entry of a request for the display by a user of the device. The request is entered, e.g., by actuation of an appropriate actuation key of the input actuator 70. The display illustrates icons including a play icon 86, a pause icon 88, a stop icon 92, a rewind icon 94, and a fast forward icon 95. In further implementations, additional commands, and other, icons are presented. In one implementation, the display is overlaid upon the media that also is displayed during the play out.

The command icons provide for user entry of command selections that control the play out of the streaming media. The user selects a control command through appropriate entry of indication of the selection. In one implementation, physical actuation keys, such as the actuation keys 96 of the input actuator are utilized. In another implementation, the display element 68 forms a touch screen display, and selection of a control command is entered by a user through a touching motion upon a portion of the display screen. And, in another implementation, the user interface is configured to recognize voice, or other sound, inputs. Voice-activated commands are utilized in this implementation. Entry by the user of the selection of the control command causes the appropriate control to be carried out on the streaming media at the device and also causes generation of a corresponding bearer control primitive that is communicated upon an endpoint bearer control channel and communicated to the other one or more devices that are participating in the shared play out of the media. The endpoint bearer control primitive, when delivered to the other device, controls the play out of the media at that other device. The endpoint bearer control primitive, issued by an issuing device, is communicated upon the endpoint bearer control channel and is received by a receiving device. The receiving device acknowledges, with an acknowledgement response, reception of the control primitive. Then, the action commanded by the control primitive is carried out in a synchronized manner.

Figure 3 illustrates a portion of the device 14, shown in Figure 1, of an exemplary implementation of the present disclosure. The device 14 is here shown to include a processor 102 that controls overall operation of the device 14. The processor 102 access data stored at a memory element 104. The data includes an operating system 106 and software programs 108 formed of program code that define algorithms. The operating system 106 and the programs 108 are executed by the processor 102 during operation of the device 14. The software programs 108 includes software modules, here including a shared play out initiation module that initiates shared play out of commonly sourced media. A software module 112 comprises a shared play out synchronizing module that, when executed, synchronizes shared play out to cause synchronous play out of the commonly sourced media.

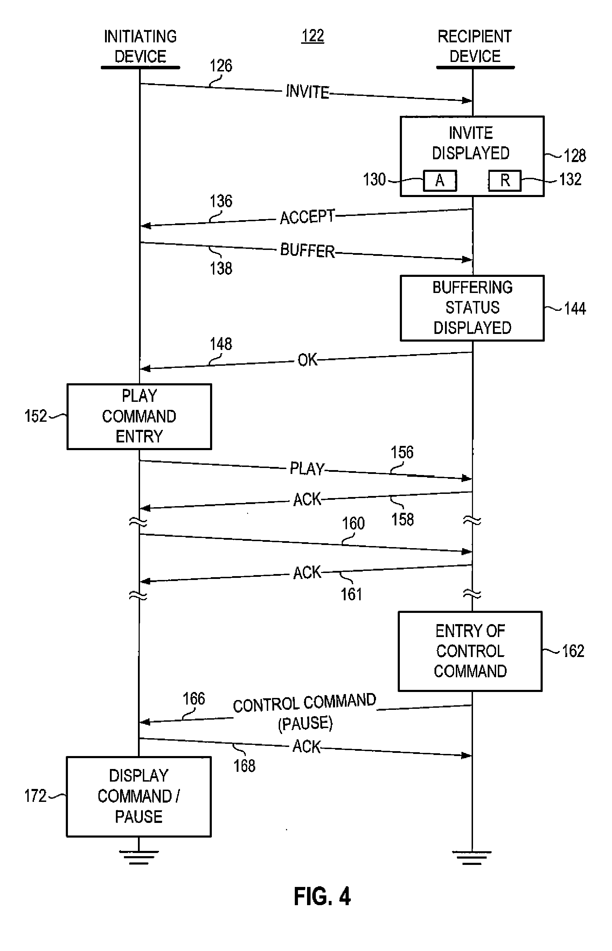

Figure 4 illustrates a sequence diagram 122 representative of the sequence of operation of an implementation of the present disclosure. The process is exemplary of signaling performed pursuant to shared media play out to share a media experience at a set of devices capable of playing out streaming media. The streaming media is of any type including streaming video and media streaming generated pursuant to online gaming.

In the exemplary process shown in Figure 4, the device 14 forms the initiating device, and the device 18 forms the recipient device. When a user of the device 14 elects to request a shared media experience with the user of the device 18, the user of the device 14 sends an invitation to the user of the device 14. An invite message, indicated by the segment 126, is communicated to the recipient device 18. When received at the recipient device, the message causes a display, here indicated at 128, that identifies to a user of the device 18 of the invitation to the media streaming. The display includes accept and reject prompts 130 and 132 or icons for a user of the device 18 to accept or reject the invitation. Here, the invitation is accepted, and an accept message is generated, indicated by the segment 136, and returned to the device 14.

Upon acceptance, streaming operations commence. Here, the device 14 forms an instructing device, and the device instructs the device 18 to buffer a portion, here a 15-second-length portion, of the streaming media indicated by the segment 138. The device 18, on receiving the command, causes the media to be buffered, indicated by the buffering graph 144. When the buffering is completed, the buffering graph indicates completion, indicating the completion of the buffering is returned, indicated by the segment 148, to the device 14.

The user of the device 14 enters a control command, here a play command indicated at the block 152. The play command causes media play out at the device 14 and generation of a play command that is sent, indicated by the segment 156, to the device 18. The command is sent on the control channel such as the channel 76 shown in Figure 1. Upon reception, an acknowledgement is returned, indicated by the segment 158. Control synchronization is carried out, and the play command causes playing of the media. When the device receives the command, the media stream plays out at the device 18.

Here, play out continues at both of the devices 14 and 18. Comparisons are made such as by exchange of information (not shown in Figure 3) of the play out of the media at the separate devices. If the play out rates are dissimilar, a device-initiated command 160 is generated and sent on the control channel to cause the play out to be returned to synchronization. Here, again, an acknowledgement is returned, indicated by the segment 161, to the device 14.

Subsequently, and as indicated at the block 162, the user of the device 18 elects to pause play out. The pause in the play out command is entered by the user of the device 18 by way of the user interface of the device. Such entry causes pausing of the media streaming at the device 18 and causes generation of a pause command, indicated by the segment 166, that is sent to the device 14. When received at the device 14, an acknowledgement is returned, indicated by the segment 168, to the device 18, synchronization is carried out, and streaming of the media at the device 14 is also paused, indicated by the block 172.

In analogous manner, other control commands are generated at either of the devices 14 or 18 and communicated to the other of the devices to coordinate the play out of the media at the separate devices.

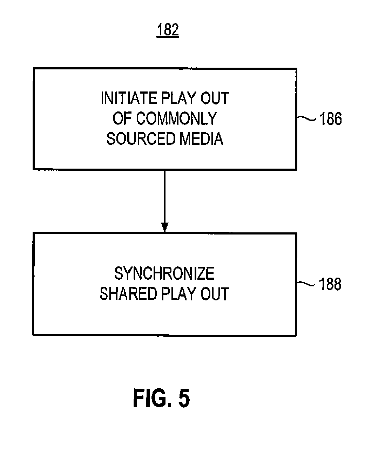

Figure 5 illustrates a method flow diagram 182 representative of the method of operation of an implementation of the present disclosure. The method facilitates shared play out of commonly sourced media at first and at least second communication endpoints.

First, and as indicated by the block 186, shared play out of the commonly sourced media is initiated. Then, and as indicated by the block 188, the shared play out is synchronized to cause synchronous play out of the commonly sourced media at each of the first and at least second communication endpoints.

Coordination of the play out of the media at separate devices is easily carried out to maintain the synchronization of the play out at the separate devices.

Presently preferred implementations of the disclosure and many improvements and advantages thereof have been described with a degree of particularity. The description is of preferred examples of implementing the disclosure, and the description of examples is not necessarily intended to limit the scope of the disclosure. The scope of the disclosure is defined by the following claims.

## Claims

1. An apparatus for facilitating shared play out of commonly sourced media at first and at least second communication endpoints, said apparatus comprising:
a media play out initiator configured to initiate the shared play out of the commonly sourced media at the first and at least second communication endpoints; and
a media play out synchronizer configured to synchronize the shared play out initiated by said media play out initiator, said media play out synchronizer configured to cause synchronous play out of the commonly sourced media at each of the first and at least second communication endpoints.

2. The apparatus of claim 1 wherein said media play out initiator is configured to establish an endpoint bearer control channel between the first and at least second communication endpoints.

3. The apparatus of claim 2 wherein said media play out initiator is configured to establish the endpoint bearer control channel upon a unified communication framework established to extend to the first and at least second communication endpoints.

4. The apparatus of claim 2 wherein said media play out synchronizer is configured to synchronize the shared play out utilizing the endpoint bearer control channel.

5. The apparatus of claim 2 wherein the endpoint bearer control channel formed by said media play out initiator is further configured to provide communication of VoIP, Voice Over Internet Protocol, data.

6. The apparatus of claim 2 wherein said media play out synchronizer is configured to cause the synchronous play out utilizing issuance of an endpoint bearer control primitive issued on the endpoint bearer control channel.

7. The apparatus of claim 6 further comprising a user interface configured to receive input commands, and wherein said synchronizer is configured to issue the endpoint bearer control primitive responsive to an input command received at said user interface.

8. The apparatus of claim 1 wherein the first and at least second communication endpoints comprises an initiator requestor and wherein said media play out initiator is embodied at the initiator requestor.

9. The apparatus of claim 1 wherein the first and at least second communication endpoints comprises an initiator recipient and wherein said media play out initiator is embodied at the initiator recipient.

10. The apparatus of claim 1 wherein the synchronous play out of the commonly sourced media causes play out at each of the first and at least second communication endpoints to be substantially identical.

11. A method for facilitating shared play out of commonly sourced media at first and at least second communication endpoints, said method comprising:
initiating the shared play out of the commonly sourced media at the first and at least second communication endpoints; and
synchronizing the shared play out initiated during said initiating to cause synchronous play out of the commonly sourced media at each of the first and at least second communication endpoints.

12. The method of claim 11 wherein said initiating comprises establishing an endpoint bearer control channel between the first and at least second communication endpoints.

13. The method of claim 12 wherein said establishing comprises establishing the endpoint bearer control channel upon a unified communication framework established to extend to the first and at least second communication endpoints.

14. The method of claim 12 wherein the endpoint bearer control channel formed during said establishing is further configured to provide communication of VoIP, Voice Over Internet Protocol, data.

15. The method of claim 12 wherein said synchronizing comprises utilizing issuance of an endpoint bearer control primitive issued on the endpoint bearer control channel.
